(19) **Europäisches Patentamt / European Patent Office / Office européen des brevets**

(11) **EP 4 002 670 A1**

(12) **EUROPEAN PATENT APPLICATION**
published in accordance with Art. 153(4) EPC

(43) Date of publication:
**25.05.2022 Bulletin 2022/21**

(21) Application number: **19937456.2**

(22) Date of filing: **16.07.2019**

(51) International Patent Classification (IPC):
**H02M 7/48** *(2007.01)*

(52) Cooperative Patent Classification (CPC):
**H02M 7/48**

(86) International application number:
**PCT/JP2019/027869**

(87) International publication number:
**WO 2021/009831 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **HITACHI INDUSTRIAL EQUIPMENT
SYSTEMS CO., LTD.
Tokyo 101-0022 (JP)**

(72) Inventor: **Tobon Mendez Mauricio de Jesus
Tokyo 101-0022 (JP)**

(74) Representative: **MERH-IP Matias Erny Reichl
Hoffmann
Patentanwälte PartG mbB
Paul-Heyse-Strasse 29
80336 München (DE)**

(54) **POWER CONVERSION DEVICE AND DETERIORATION DIAGNOSTIC SYSTEM**

(57) This power conversion device comprises a DC conversion unit for converting AC voltage into DC voltage, a smoothing capacitor for smoothing DC voltage, an AC inversion unit for inverting DC voltage into AC voltage, a control unit for controlling the AC inversion unit, a voltage detector for detecting DC voltage, and a current detector for detecting a load current. During operation, the control unit uses the DC voltage detected by the voltage detector as a basis to acquire the change in ripple voltage over time and determines the deterioration state of the smoothing capacitor on the basis of the change in ripple voltage over time and the load current.

FIG. 1

EP 4 002 670 A1

## Description

TECHNICAL FIELD

The present invention relates to a power conversion device, and a deterioration diagnostic system using the same.

BACKGROUND ART

A power conversion device includes a diode bridge that rectifies an AC voltage, a smoothing capacitor, and a plurality of switching elements. The smoothing capacitor plays a role of smoothing a rectified voltage. However, ripple occurs due to a capacitor or load. When the smoothing capacitor deteriorates, a capacitance decreases and the ripple increases. When the ripple becomes large, a switch timing in an inverter part becomes unstable, and thus the conversion device cannot generate a desired AC signal.

The following patent documents have been proposed for diagnosing deterioration of the smoothing capacitor.

Summary of Patent Document 1 states that "A life diagnosis circuit 100 is provided to control a reverse conversion circuit 5 so that a DC current flows through an electric motor 13 when an AC power supply 1 is cut OFF, calculate a capacitance of a smoothing capacitor 4 by a CPU 10 based on values of a DC current detected by an output current detection circuit 14 and a DC voltage detected by a DC voltage detection circuit 6, and diagnose that the smoothing capacitor 4 reaches an end of a life when the capacitance of the smoothing capacitor 4 obtained by calculation becomes equal to or less than a lifetime capacitance stored in an nonvolatile storage circuit 8 in advance."

In addition, summary of Patent Document 2 states that "A deterioration detection circuit of a smoothing capacitor is configured to include a load current detection unit 5 that measures a load current of a load (conversion unit 6 and motor 7) connected to a smoothing capacitor 3 to which a DC voltage including a pulsating current is applied, a DC voltage detection unit 4 that measures a DC voltage of the smoothing capacitor 3, a control unit 9 to which these units are connected, and a storage unit 9a that stores a predetermined comparative average voltage value corresponding to the load current, and the control unit 9 calculates an average voltage value from the DC voltage of the smoothing capacitor 3, and compares the average voltage value with the comparative average voltage value corresponding to a value of the load current measured by the load current detection unit 5 to determine an abnormality of the smoothing capacitor 3."

CITATION LIST

PATENT DOCUMENT

Patent Document 1: JP 2007-295655 A
Patent Document 1: JP 2009-168587 A

SUMMARY OF THE INVENTION

PROBLEMS TO BE SOLVED BY THE INVENTION

In Patent Document 1, the deterioration state of the smoothing capacitor can be determined only at the time of cutting OFF. However, depending on the use of the power conversion device, regular operation is performed, and thus it is desired to determine the deterioration state of the smoothing capacitor during the operation of the power conversion device.

Further, in Patent Document 2, to detect the abnormality of the smoothing capacitor, an average voltage is calculated from the DC voltage of the smoothing capacitor in a predetermined period and compared with the comparative average voltage value determined by the load current.

Therefore, it is possible to detect an abnormality in the smoothing capacitor while operating the power conversion device. However, when the load current changes momentarily, the ripple also changes, and it is difficult to diagnose the deterioration of the smoothing capacitor only by the average voltage for a specified period.

Further, when a regenerative current flows, the DC voltage greatly fluctuates, so that it is difficult to diagnose deterioration by using the average voltage.

An object of the invention is to provide a power conversion device capable of determining a deteriorated state of a smoothing capacitor during an operation in which a momentary load fluctuation or a regenerative current is generated.

SOLUTIONS TO PROBLEMS

A preferred example of the invention is a power conversion device including a DC conversion unit for converting an AC voltage into a DC voltage, a smoothing capacitor for smoothing the DC voltage, an AC inversion unit for inverting the DC voltage into an AC voltage, a control unit for controlling the AC inversion unit, a voltage detector for detecting the DC voltage, and a current detector for detecting a load current, in which during an operation, the control unit acquires a change of a ripple voltage over time based on the DC voltage detected by the voltage detector, and determines a deterioration state of the smoothing capacitor based on a change of the ripple voltage over time and the load current.

EFFECTS OF THE INVENTION

According to the invention, it is possible to determine a deteriorated state of a smoothing capacitor during an operation in which a momentary load fluctuation or a regenerative current is generated.

BRIEF DESCRIPTION OF THE DRAWINGS

Fig. 1 is a schematic configuration diagram of a motor drive system using a power conversion device in a first embodiment.
Fig. 2 is a diagram illustrating waveforms of an output current from a DC conversion unit, a current of a smoothing capacitor, a load current, and a DC voltage.
Fig. 3 is a diagram illustrating a processing flow for acquiring DC voltage data in the first embodiment.
Fig. 4 is a diagram illustrating a processing flow for determining a deterioration state of the smoothing capacitor in the first embodiment.
Fig. 5 is a schematic configuration diagram of a motor drive system using a power conversion device in a second embodiment.

MODE FOR CARRYING OUT THE INVENTION

Hereinafter, embodiments of the invention will be described with reference to the drawings.

First embodiment

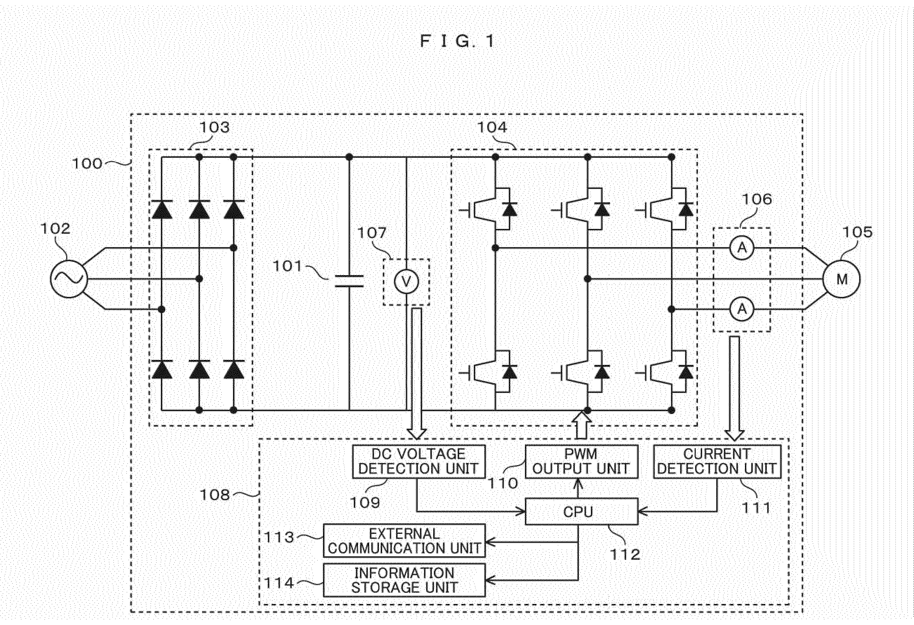

Fig. 1 is a schematic configuration diagram of a motor drive system using a power conversion device 100 in the present embodiment. This motor drive system includes the power conversion device 100 that supplies power to a control target, a three-phase AC power supply 102 that supplies power to the power conversion device 100, and an AC electric motor 105 that is a control target.

The three-phase AC power supply 102 is a power supply that supplies power to the power conversion device 100. Specifically, a three-phase AC voltage supplied from an electric power company or an AC voltage supplied from a generator is supplied.

The power conversion device 100 includes a smoothing capacitor 101, a DC conversion unit 103, an AC inversion unit 104, a current detector 106, a DC voltage detector 107, and a control unit 108.

The DC conversion unit 103 converts an AC voltage input from the three-phase AC power supply 102 into a DC voltage and outputs the converted DC voltage to the smoothing capacitor 101. For example, the DC conversion unit 103 is configured as a DC conversion circuit including a diode or a DC conversion circuit using an IGBT (Insulated Gate Bipolar Transistor) and a flywheel diode. Fig. 1 illustrates a DC conversion circuit including a diode as an example.

The smoothing capacitor 101 smoothes the DC voltage input from the DC conversion unit 103, and outputs the DC voltage to the AC inversion unit 104.

The AC inversion unit 104 receives the DC voltage of the smoothing capacitor 101 and an output command of the control unit as inputs, and inverts the DC voltage into an AC voltage based on the output command of the control unit. In the case of the present embodiment, outputting to the AC electric motor 105 is performed. Further, for example, the AC inversion unit 104 of the embodiment is configured as an AC inversion circuit using an IGBT and a flywheel diode.

The current detector 106 detects a current output to the AC electric motor 105 and outputs the detected current to a current detection unit 111. Further, the current detector 106 of the present embodiment includes a Hall CT or a shunt resistor. Further, a position of the current detector 106 is not limited to a position illustrated in Fig. 1, and may be a place where the output current to the AC electric motor 105 can be measured, for example, inside the AC inversion unit 104 or between the DC conversion unit 103 and the AC inversion unit 104.

The DC voltage detector 107 detects a DC voltage and outputs the detected DV voltage to the DC voltage detection unit 109. The DC voltage detector 107 includes an arrangement of resistors. Note that a position of the DC voltage detector 107 is not limited to a position illustrated in Fig. 1, and may be any place as long as the voltage of the smoothing capacitor 101 can be detected.

Next, the control unit 108 will be described.

The control unit 108 includes a current detection unit 111, a DC voltage detection unit 109, a CPU (Central Processing Unit) 112, an information storage unit 114, a PWM (Pulse Width Modulation) output unit 110, and an external communication unit 113.

The CPU 112 is an arithmetic unit such as an MCU (Micro Controller Unit) or an FPGA (field-programmable gate array), and a function described later is realized by an arithmetic circuit of software or hardware.

The current detection unit 111 receives a signal output by the current detector 106 as an input, converts the received signal into calculation data, and outputs the calculation data to the CPU 112. The current detection unit 111 includes an AD converter, etc.

The DC voltage detection unit 109 receives a signal output by the DC voltage detector 107 as an input, converts the received signal into calculation data, and outputs the calculation data to the CPU 112. In the present embodiment, for example, an AD converter, etc. is included.

The CPU 112 processes the detected current and voltage, and performs control processing for the AC electric motor 105. Specifically, examples thereof include creation and transmission of an output signal to the PWM output unit 110. Note that in the present embodiment, the case where a deterioration state of the smoothing capacitor 101 is determined by the CPU 112 will be described. However, the processing may be performed by an external device such as a host device via the external communication unit 113.

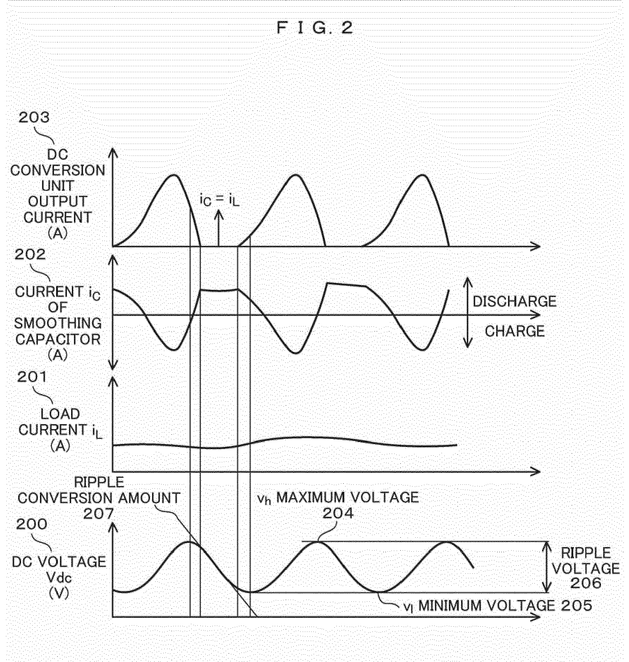

Fig. 2 is a diagram illustrating waveforms of an output current 203 from the DC conversion unit of the power conversion device 100, a current $i_C$ 202 of the smoothing capacitor, a load current $i_L$ 201, and a DC voltage Vdc 200. First, a principle of the present embodiment will be described.

As illustrated in Fig. 2, the DC voltage Vdc has a ripple voltage 206, a maximum voltage 204 thereof is treated as $v_h$, and a minimum voltage 205 thereof is treated as $v_l$. Further, as illustrated in Fig. 2, a slope of the ripple voltage over time when the ripple voltage decreases is defined as a ripple conversion amount 207 $\Delta v/\Delta t$. Further, a current flowing through the smoothing capacitor 101 is defined as $i_C$, and a load current supplied to the AC electric motor 105 is defined as $i_L$.

The DC conversion unit 103 converts a voltage from the power supply to a direct current and smoothes the capacitor. Since the input of the DC conversion unit 103 is a three-phase AC voltage, an output current 203 of the DC conversion unit 103 is periodic as illustrated in Fig. 2.

In a cycle of the output current 203 of the DC conversion unit 103, only a part of the load current $i_L$ is supplied from the DC conversion unit 103. The smoothing capacitor 101 also operates to supply the load current $i_L$. In some cases, the smoothing capacitor 101 supplies the entire load current $i_L$. At this time, the smoothing capacitor 101 is discharged, and the DC voltage Vdc is reduced.

As illustrated in Fig. 2, when the load current $i_L$ is small, the load current $i_L$ can be approximated to the current $i_C$ from the smoothing capacitor 101. Then, a capacitance C of the capacitor can be obtained from Equation (1).

$$C = i_C*(dv/dt)^{-1} \quad (1)$$

In this way, the capacitance C of the smoothing capacitor can be estimated by acquiring the load current $i_L$, the DC voltage Vdc, and time data at the timing (during discharge) when the smoothing capacitor supplies the current.

However, as the load increases, the current supplied from the DC conversion unit 103 also increases even at the timing when the smoothing capacitor 101 supplies the current (the figure of the current waveform is omitted). Therefore, it is necessary to approximate the current $i_C$ of the smoothing capacitor 101 from the load current $i_L$. The current of the smoothing capacitor 101 is approximated by $i_C \approx i_L(1 - k*i_L)$. k is determined by parameters of the power conversion device and experimental measurement.

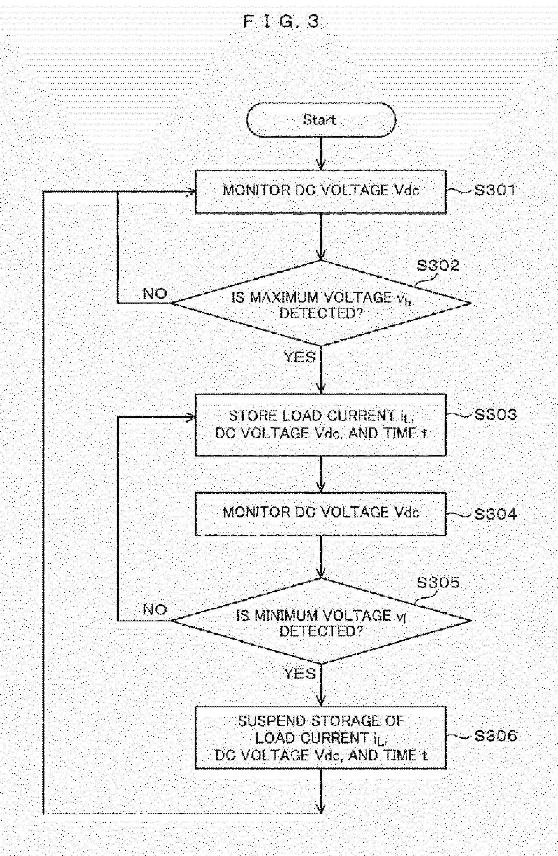

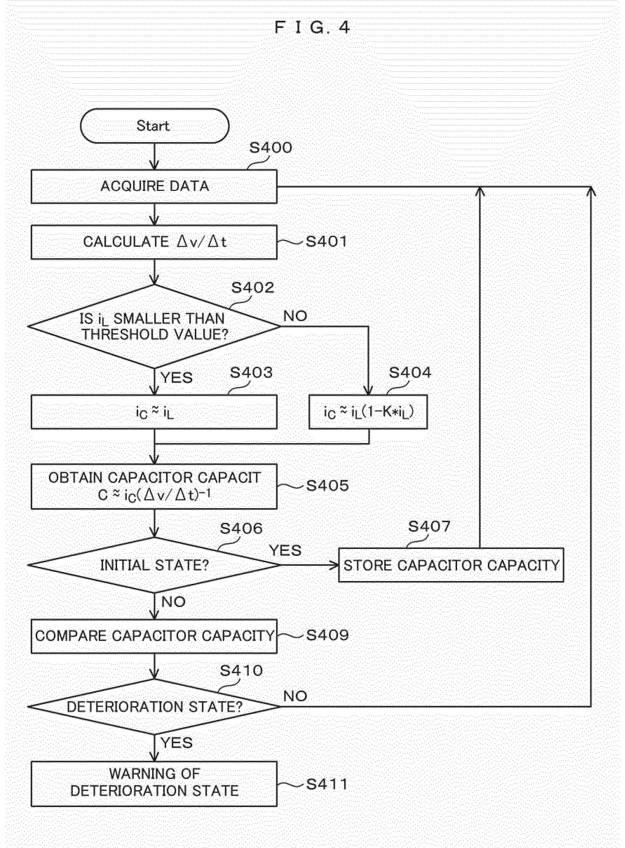

Fig. 3 is a diagram illustrating a processing flow for acquiring data for the DC voltage Vdc detected by the DC voltage detection unit 109. Fig. 3 and Fig. 4 described later illustrate a process executed by the CPU 112 in the control unit 108 in the first embodiment.

In order to monitor the DC voltage Vdc, the DC voltage Vdc is fetched from the DC voltage detection unit 109 (S301).

The fetched time-series DC voltage Vdc is compared, and it is determined whether or not the maximum voltage $v_h$ is detected (S302).

When the maximum voltage $v_h$ is not detected (No in S302), the process returns to S301 and the DC voltage Vdc is monitored.

When the maximum voltage $v_h$ is detected (Yes in S302), sampling of the load current $i_L$ and storage thereof are started. Then, the sampled load current $i_L$, DC voltage Vdc, and time t at which these pieces of data are acquired are stored in the information storage unit 114 (S303).

Next, in order to monitor the DC voltage Vdc, the DC voltage Vdc is fetched from the DC voltage detection unit 109 (S304).

The fetched time-series DC voltage Vdc is compared and whether or not the minimum voltage $v_l$ is detected is determined (S305).

When the minimum voltage $v_l$ is not detected (No in S305), the process returns to S303 to sample the load current $i_L$ and save the load current $i_L$, the DC voltage Vdc, and the time t. While the minimum voltage $v_l$ is not detected, the process of S303 is repeated.

When $v_l$ is detected in S305 (Yes in S305), storage of the sampled load current $i_L$, the DC voltage Vdc, and the time t is suspended (S306). Then, the process returns to S301.

Fig. 4 is a diagram illustrating a processing flow for determining a deterioration state of the smoothing capacitor 101.

The CPU 112 in the control unit 108 acquires data (S400). Specifically, as described with reference to Fig. 3, data of the load current $i_L$, the DC voltage Vdc, and the time t stored in the information storage unit 114 is acquired.

Based on the acquired ripple voltage of the DC voltage Vdc and the time t, the ripple conversion amount $\Delta v/\Delta t$, which is a change of the ripple voltage over time, is calculated (S401). Here, $\Delta v$ is a voltage difference between the maximum voltage $v_h$ of the ripple voltage and the minimum voltage $v_l$ of the ripple voltage. $\Delta t$ is a time difference between a time when the maximum voltage $v_h$ is detected and a time when the minimum voltage $v_l$ is detected.

Next, the load current $i_L$ and a threshold value of the load current are compared (S402). A threshold value of the load current is determined and set in advance based on specifications (rated current, capacity, etc.) of the power conversion device 100.

When the load current $i_L$ is smaller than the threshold value of the load current (Yes in S402), the current $i_C$ of the smoothing capacitor is approximated as the load current $i_L$ (S403).

When the load current $i_L$ is equal to or greater than the threshold value of the load current (No in S402), as the current $i_C$ of the smoothing capacitor, the current $i_C$ of the smoothing capacitor is calculated by approximation based on a formula $i_L(1- k*i_L)$ using the load current $i_L$ and a preset parameter k (S404).

An estimated capacitor capacity C of the smoothing capacitor 101 is calculated by a formula $C = i_C*(\Delta v/\Delta t)^{-1}$ using the approximate current $i_C$ of the smoothing capacitor and the ripple conversion amount $\Delta v/\Delta t$ (S405).

It is determined whether or not the smoothing capacitor 101 is in an initial state (S406). The initial state means the case where the smoothing capacitor 101 is used for the first time or replaced with a new one.

In general, the capacitance of the capacitor widely varies. Therefore, when the power conversion device 100 is in an initial status and the smoothing capacitor 101 is in an initial state (Yes in S406), the capacitor capacity obtained in S405 is stored (S407). A value of the stored capacitor capacity in the initial state is used in step S409. However, the threshold value of the capacitor capacity may be set in consideration of an allowable range instead of the capacitor capacity in the initial state.

When the smoothing capacitor 101 is not in the initial state (No in S406), the capacitor capacity C calculated in S405 is compared with the threshold value of the capacitor capacity stored in S407 (S409).

Based on a comparison result in S409, the deterioration state of the smoothing capacitor 101 is determined (S410). Specifically, when the capacitance C of the smoothing capacitor 101 calculated in S405 is smaller than the threshold value of the capacitor capacitance, it is determined that the smoothing capacitor 101 is in the deterioration state (Yes in S410).

When the capacitance C of the smoothing capacitor 101 calculated in S405 is equal to or greater than the threshold value of the capacitor capacitance, it is determined that the smoothing capacitor 101 is not in the deterioration state (No in S410), and the process returns to step S400.

When it is determined that the smoothing capacitor 101 is in the deterioration state, a caution (warning) is given to indicate the deterioration state (S411). As a warning, an error signal is output. It is not always necessary to give a warning. For example, instead of S411, a determination result may be recorded in the information storage unit 114 such as a memory.

According to the first embodiment, by providing the DC voltage detection unit 109 and the current detection unit 111, the power conversion device 100 can determine the deterioration state of the smoothing capacitor 101 without adding new parts.

Since the DC voltage detection unit 109 and the current detection unit 111 are installed in the normal power conversion device 100, it is unnecessary to add parts to the normal power conversion device 100. Further, since the power conversion device 100 can be diagnosed even during operation, it is possible to check a deterioration status of the capacitor even when continuous operation is required.

Further, according to the present embodiment, by obtaining the capacitance of the smoothing capacitor based on the change of the ripple voltage over time, it is possible to determine the deterioration state of the smoothing capacitor during an operation in which momentary load fluctuation or regenerative current is generated.

Second embodiment

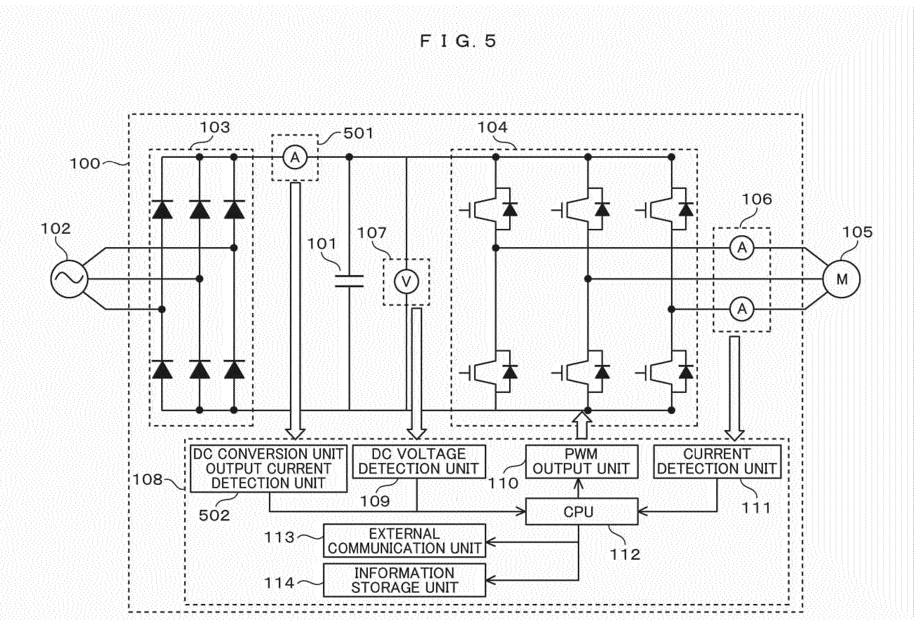

Fig. 5 is a schematic configuration diagram of a motor drive system using a power conversion device 100 in a second embodiment. In the second embodiment, as illustrated in Fig. 5, a DC conversion unit output current detector 501 and a DC conversion unit output current detection unit 502 are added to the configuration of the first embodiment. Since components other than the DC conversion unit output current detector 501 and the DC conversion unit output current detection unit 502 are the same as those of Fig. 1, duplicated description will be omitted.

Similar to the first embodiment, in the second embodiment, at the timing when the smoothing capacitor 101 supplies a current, that is, at the time of discharge, an output current $i_{dc}$ of a DC conversion unit detected by the DC conversion unit output current detector 501 is similarly acquired in S400 of Fig. 4.

In Fig. 4, S402, S403, and S404 are unnecessary since it is unnecessary to approximate the current $i_C$ of the smoothing capacitor in the second embodiment. Instead, in the second embodiment, the current $i_C$ of the smoothing capacitor is calculated from a DC conversion unit output current $i_{dc}$ and a load current $i_L$ by a formula $(i_C = i_{dc} - i_L)$ instead of approximating the current $i_C$ of the smoothing capacitor. The other steps of Fig. 4 are also performed in the second embodiment.

The capacitance of the smoothing capacitor 101 is calculated based on the calculated current $i_C$ of the smoothing capacitor and a formula illustrated in S405 of Fig. 4. In the second embodiment, since the DC conversion unit output current detection unit 502 is added, a current actually flowing can be calculated without approximating the current $i_C$ of the smoothing capacitor.

Therefore, a calculation error of the capacitor capacity can be reduced, and the accuracy of determining the deterioration state of the smoothing capacitor can be improved in the second embodiment from the first embodiment. Further, the second embodiment has a similar effect to that of the first embodiment, that is, the deterioration state of the smoothing capacitor can be determined during an operation in which a momentary load fluctuation or a regenerative current is generated.

Note that the invention is not limited to the above-described embodiment, and various modifications are included. For example, it is possible to configure a deterioration diagnostic system in which data for the DC voltage illustrated in Fig. 3 is acquired in the power conversion device 100, data of a DC conversion unit output current $i_{dc}$, a load current $i_L$, a DC voltage, etc. is transmitted to a higher-level computer such as a cloud from an external communication unit 113, and a ripple conversion amount and a capacitance are calculated in a host device to determine the deterioration state of the smoothing capacitor.

Further, since there is a possibility that there is a calculation error in the DC conversion unit 103 or the AC inversion unit 104 due to a hindrance such as noise, it is possible to determine the deterioration state not only by a threshold level but also by statistical analysis of the calculated capacitance of the smoothing capacitor for determination of the deterioration of the smoothing capacitor.

The power conversion device 100 in the above embodiment can be applied as a power conversion device of a general-purpose inverter, a servo amplifier, a DCBL controller, etc.

REFERENCE SIGNS LIST

| 100 | Power conversion device |
| 101 | Smoothing capacitor |
| 103 | DC conversion unit |
| 104 | AC inversion unit |
| 108 | Control unit |
| 109 | DC voltage detection unit |
| 111 | Current detection unit |
| 112 | CPU |
| 113 | External communication unit |
| 114 | Information storage unit |

## Claims

1. A power conversion device comprising:

   a DC conversion unit for converting an AC voltage into a DC voltage;
   a smoothing capacitor for smoothing the DC voltage;
   an AC inversion unit for inverting the DC voltage into an AC voltage;
   a control unit for controlling the AC inversion unit;
   a voltage detector for detecting the DC voltage; and
   a current detector for detecting a load current,
   wherein during an operation, the control unit acquires a change of a ripple voltage over time based on the DC voltage detected by the voltage detector, and

   determines a deterioration state of the smoothing capacitor based on a change of the ripple voltage over time and the load current.

2. The power conversion device according to claim 1, wherein the control unit determines a deterioration state of the smoothing capacitor based on the load current during discharge.

3. The power conversion device according to claim 1, wherein the control unit calculates a ripple conversion amount which is a change of the ripple voltage over time.

4. The power conversion device according to claim 3, wherein the control unit calculates a capacitance of the smoothing capacitor based on the ripple conversion amount and an estimated current of the smoothing capacitor.

5. The power conversion device according to claim 4, wherein when the load current is smaller than a threshold value, the control unit calculates the capacitance by regarding the load current as a current of the smoothing capacitor.

6. The power conversion device according to claim 4, wherein when the load current is larger than or equal to a threshold value, the control unit calculates a current of the smoothing capacitor based on the load current and a parameter.

7. The power conversion device according to claim 1, wherein the control unit

   calculates a capacitance of the smoothing capacitor, and
   uses the calculated capacitance as a threshold value to determine a deterioration state of the smoothing capacitor when the smoothing capacitor is in an initial state.

8. The power conversion device according to claim 1, wherein the control unit calculates a capacitance of the smoothing capacitor and determines a deterioration state of the smoothing capacitor based on the calculated capacitance and a threshold value.

9. The power conversion device according to claim 1, further comprising

   a DC conversion unit output current detection unit for detecting an output current of the DC conversion unit,
   wherein during an operation, the control unit acquires a change of the ripple voltage over time based on the DC voltage detected by the voltage detector, and determines a deterioration state of the smoothing capacitor based on a change of the ripple voltage over time, a current detected by the DC conversion unit output current detection unit, and the load current.

10. A deterioration diagnostic system comprising:

a power conversion device including
a DC conversion unit for converting an AC voltage into a DC voltage,
a smoothing capacitor for smoothing the DC voltage,
an AC inversion unit for inverting the DC voltage into an AC voltage,
a control unit for controlling the AC inversion unit,
a voltage detector for detecting the DC voltage,
a current detector for detecting a load current, and
an external communication unit; and
a host device,
wherein the control unit acquires a change of a ripple voltage over time based on the DC voltage detected by the voltage detector,
the external communication unit transmits the ripple voltage and the load current to the host device, and
the host device determines a deterioration state of the smoothing capacitor based on a change of the ripple voltage over time and the load current.

11. The deterioration diagnostic system according to claim 10,

wherein the power conversion device includes a DC conversion unit output current detection unit for detecting an output current of the DC conversion unit,
the external communication unit transmits the ripple voltage, an output current of the DC conversion unit, and the load current to the host device, and
the host device determines a deterioration state of the smoothing capacitor based on a change of the ripple voltage over time, an output current of the DC conversion unit, and the load current.

F I G. 1

F I G . 2

203
DC
CONVERSION
UNIT
OUTPUT
CURRENT
(A)

$i_C = i_L$

202
CURRENT $i_C$
OF
SMOOTHING
CAPACITOR
(A)

DISCHARGE

CHARGE

201
LOAD
CURRENT $i_L$
(A)

RIPPLE
CONVERSION AMOUNT
207

$v_h$ MAXIMUM VOLTAGE
204

200
DC VOLTAGE
Vdc
(V)

RIPPLE
VOLTAGE
206

$v_l$ MINIMUM VOLTAGE 205

F I G . 3

```
                    ┌─────────────┐
                    │    Start    │
                    └──────┬──────┘
                           │
                           ▼
        ┌──────────────────────────────────┐
   ┌───►│    MONITOR DC VOLTAGE Vdc         │───S301
   │    └──────────────────┬───────────────┘
   │                       │
   │                       ▼
   │            ╱────────────────────╲
   │  NO       ╱   IS MAXIMUM VOLTAGE  ╲  S302
   ├──────────◄      v_h DETECTED?      ►
   │           ╲                       ╱
   │            ╲────────────────────╱
   │                     │ YES
   │                     ▼
   │    ┌──────────────────────────────────┐
   │ ┌─►│   STORE LOAD CURRENT i_L,         │───S303
   │ │  │ DC VOLTAGE Vdc, AND TIME t        │
   │ │  └──────────────────┬───────────────┘
   │ │                     │
   │ │                     ▼
   │ │  ┌──────────────────────────────────┐
   │ │  │    MONITOR DC VOLTAGE Vdc         │───S304
   │ │  └──────────────────┬───────────────┘
   │ │                     │
   │ │                     ▼
   │ │        ╱────────────────────╲
   │ │ NO    ╱  IS MINIMUM VOLTAGE   ╲  S305
   │ └──────◄      v_l DETECTED?      ►
   │         ╲                       ╱
   │          ╲────────────────────╱
   │                   │ YES
   │                   ▼
   │  ┌──────────────────────────────────┐
   │  │     SUSPEND STORAGE OF            │───S306
   │  │     LOAD CURRENT i_L,             │
   │  │  DC VOLTAGE Vdc, AND TIME t       │
   │  └──────────────────┬───────────────┘
   │                     │
   └─────────────────────┘
```

F I G. 4

```
                    ┌──────────────┐
                    │    Start     │
                    └──────┬───────┘
                           │        S400
                    ┌──────▼───────┐
                    │ ACQUIRE DATA │───────────────────────────────────┐
                    └──────┬───────┘                                    │
                           │                                            │
                    ┌──────▼──────────┐   S401                          │
                    │ CALCULATE Δv/Δt │                                 │
                    └──────┬──────────┘                                 │
                           │         S402                               │
                      ◇────▼────────────◇    NO                         │
                     ╱ IS i_L SMALLER THAN ╲─────────┐                  │
                     ╲ THRESHOLD VALUE?    ╱         │                  │
                      ◇────┬────────────◇            │                  │
                       YES │     S403           S404 │                  │
                    ┌──────▼───────┐      ┌──────────▼────────┐         │
                    │  i_C ≈ i_L   │      │ i_C ≈ i_L(1−K∗i_L)│         │
                    └──────┬───────┘      └──────────┬────────┘         │
                           │◄───────────────────────┘                  │
                    ┌──────▼───────────────────┐  S405                  │
                    │ OBTAIN CAPACITOR CAPACIT  │                       │
                    │ C ≈ i_C(Δv/Δt)⁻¹          │                       │
                    └──────┬───────────────────┘        S407            │
                           │      S406                                  │
                      ◇────▼──────◇    YES   ┌────────────────────────┐ │
                     ╱ INITIAL STATE? ╲──────│STORE CAPACITOR CAPACITY│─┤
                     ╲              ╱        └────────────────────────┘ │
                      ◇────┬──────◇                                     │
                        NO │                                           │
                    ┌──────▼────────────────────┐  S409                │
                    │ COMPARE CAPACITOR CAPACITY │                     │
                    └──────┬─────────────────────┘                     │
                           │     S410                                  │
                      ◇────▼──────────◇    NO                          │
                     ╱ DETERIORATION STATE? ╲────────────────────────────┘
                     ╲                  ╱
                      ◇────┬──────────◇
                       YES │
                    ┌──────▼───────────┐  S411
                    │   WARNING OF     │
                    │DETERIORATION STATE│
                    └──────────────────┘
```

11

# F I G . 5

| INTERNATIONAL SEARCH REPORT | International application No. |
|---|---|
| | PCT/JP2019/027869 |

**A. CLASSIFICATION OF SUBJECT MATTER**
Int.Cl. H02M7/48(2007.01)i

According to International Patent Classification (IPC) or to both national classification and IPC

**B. FIELDS SEARCHED**

Minimum documentation searched (classification system followed by classification symbols)
Int.Cl. H02M7/42-98

Documentation searched other than minimum documentation to the extent that such documents are included in the fields searched
|  |  |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-025927 A (LSIS CO., LTD.) 06 February 2014, entire text, all drawings & US 2014/0032145 A1, entire text, all drawings & EP 2690452 A2 & KR 10-2014-0013730 A & CN 103580497 A | 1-11 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August 2019 (30.08.2019) | 10 September 2019 (10.09.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/027869

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-172910 A (YASKAWA ELECTRIC CORPORATION) 24 July 2008, entire text, all drawings (Family: none) | 1-11 |
| A | JP 2018-102082 A (FANUC CORPORATION) 28 June 2018, entire text, all drawings & US 2018/0175775 A1, entire text, all drawings & DE 102017011598 A1 & CN 108233724 A | 1-11 |
| A | JP 2018-046609 A (HITACHI, LTD.) 22 March 2018, entire text, all drawings (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007295655 A
- JP 2009168587 A